(19) Europäisches Patentamt
European Patent Office
Office européen des brevets

(11) EP 4 574 312 A1

(12) **EUROPEAN PATENT APPLICATION**

(43) Date of publication:
**25.06.2025 Bulletin 2025/26**

(21) Application number: **23219225.2**

(22) Date of filing: **21.12.2023**

(51) International Patent Classification (IPC):
$B22F\ 10/28^{(2021.01)}$    $B22F\ 10/80^{(2021.01)}$
$B29C\ 64/153^{(2017.01)}$    $B29C\ 64/393^{(2017.01)}$
$B33Y\ 50/02^{(2015.01)}$    $G06F\ 30/10^{(2020.01)}$
$G06F\ 111/04^{(2020.01)}$    $G06F\ 119/18^{(2020.01)}$

(52) Cooperative Patent Classification (CPC):
**B33Y 50/02; B22F 10/28; B22F 10/80;
B29C 64/153; B29C 64/393; B33Y 50/00;
G06F 30/10; G06F 30/17;** B22F 10/366;
G06F 2113/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Heinrichsdorff, Frank**
**14513 Teltow (DE)**
• **Kastsian, Darya**
**14612 Falkensee (DE)**
• **Reznik, Daniel**
**13503 Berlin (DE)**

(74) Representative: **Siemens Patent Attorneys
Postfach 22 16 34
80506 München (DE)**

(54) **METHOD OF PROVIDING CONTROL DATA FOR MANUFACTURING A WORKPIECE BY A LASER POWDER BED FUSION DEVICE, METHOD TO OPERATE A LASER POWDER BED FUSION DEVICE, CONTROL UNIT, COMPUTER PROGRAM AND STORAGE MEDIUM**

(57) The invention relates to method of providing control data (11) for manufacturing a workpiece (1) by a laser powder bed fusion device (2), comprising the following steps performed by a control unit (3): evaluating a function describing a local modified mass integral value within a respective of the layers (6), the local modified mass integral value describing a local portion of a predefined reference volume (7) in a local depth within a volume of the model (4); dividing the respective layers (6) into continuous regions (9) of predefined categories based on the local modified mass integral values, wherein the categories are defined by predefined local mass integral value ranges and wherein the categories are assigned respective manufacturing parameters and exposure vectors (10); and generating control data (11) to control the laser powder bed fusion device (2) to manufacture the workpiece (1).

FIG 3

EP 4 574 312 A1

**Description**

The present invention relates to a method of providing control data for manufacturing a workpiece by a laser powder bed fusion device, and a method to operate a laser powder bed fusion device to manufacture a workpiece. Furthermore the present invention relates to a corresponding control unit and a corresponding laser powder bed fusion device. Additionally, the present invention relates to a respective computer program and a respective storage medium.

Laser powder bed fusion (LPBF) technology is well suited for manufacturing of complex shape structures. With this technology, overhang regions of a workpiece of angles usually lower than 45° require support structures. Support structures are light-weighted parts that typically connect the overhang regions with a build plate. They provide additional stability during LPBF manufacturing process. Support structures are removed in a post-processing and surfaces where supports were attached require additional treatment.

If supports can be omitted, then the process requires less manufacturing time, requires less material and post-processing effort is reduced.

It is an object of the present invention to allow a manufacturing of a workpiece comprising overhangs with lower angles than 45° and overhangs of a larger area in a laser powder bed fusion procedure without a need for support structures.

This objective is achieved by the respective subject matter of the independent claims. Further implementations and preferred embodiments are subject matter of the dependent claims.

A first aspect of the present invention is related to a method of providing control data for manufacturing of a workpiece by a laser powder bed fusion device. The method comprises the following steps performed by a control unit.

The control data may comprise instructions for a laser powder bed fusion device to manufacture the workpiece.

A first step of the method comprises a reception of the volume model of the workpiece by the control unit. The volume model describes a volume of material of the workpiece to be manufactured by the laser powder bed fusion device. The volume model of the workpiece may comprise a 3-D model of the workpiece and material parameters of the workpiece. The volume model may be a CAD file for example.

The method comprises a step of evaluating a stack of consecutive layers for manufacturing the workpiece based on the volume model. In other words, as the workpiece is to be produced in a layer-by-layer procedure by the laser powder bed fusion device, the control unit determines the respective layers for manufacturing the workpiece and aligns them in a stack.

The method comprises a step of evaluating for each of the layers a local material depth function describing a local material depth of the volume module below the respective layer by the control unit. The local material depth is limited by a predefined maximal depth. In other words, the control unit evaluates for each of the layers the material of the volume model below the respective layer. The control unit determines the local material depth of the volume model below the layer. The local material depth is limited to the predefined maximal depth. In other words, the control unit determines the local material depth under the respective layer up to the predefined maximal depth. Therefore, the control unit ignores a portion of the material depth larger than the predefined maximal depth. As the material depth of the volume below the layer may depend on the lateral position within the layer, the control unit evaluates the local material depth function, wherein the local material depth function assigns the respective local material depth to the respective position within the layer.

The method comprises a step of evaluating a function describing a local modified mass integral value within the respective layer. The local modified mass integral value describes a local portion of the predefined reference volume within a local depth volume of the local material depth. In other words, a predefined reference volume is given. The predefined reference volume may describe a half cavity of a specific radius. The modified mass integral value describes the portion of the predefined reference volume that is covered by the local depth volume at a specific position of the layer.

The method comprises a step of dividing the respective layers into continuous regions of predefined categories based on the local modified mass integral values. In other words, the local modified mass integral value may change within the respective layers. The respective layers are divided into the continuous regions. The regions are attributed to predefined categories. The categories are defined by predefined local mass integral value ranges. The categories are associated with respective manufacturing parameters for manufacturing the respective regions.

The method comprises a step of generating control data to control the laser powder bed fusion device to manufacture the workpiece by the control unit.

The invention has the advantage that the control data assign respective manufacturing parameters to regions of the respective workpiece depending on an overlap of the workpiece in the regions, described by the local modified mass integral values. Therefore, the method allows overhanging regions to be taken into account in the manufacturing of the workpiece.

According to a further embodiment of the invention, the method comprises the following steps performed by the control unit. The method comprises a step of evaluating for each region of at least one first category of the predefined categories a respective exposure vector orientation according to a predefined orientation evaluation method. In other words to manufacture the workpiece, an energy beam has to be guided along the respective exposure vectors within the respective layers. Each region of the at least one of the predefined categories may comprise respective exposure vectors oriented in the same exposure vector orientation within the respective region. The orientation of the exposure vectors within the respective region may influence a quality of the material of the workpiece within the respective region. Therefore, it is an object of the orientation evaluation method to improve the quality of the respective region by investigating the exposure vector orientation for the respective region. The orientation evaluation method may be performed for each region of the first category. The orientation evaluation method may also be performed for each region of one or more other of the categories.

The orientation evaluation method comprises a calculation for each candidate exposure vector orientation of the respective region an average absolute difference value describing an average of absolute difference values of the exposure vectors in the region, oriented in the respective candidate exposure vector orientation. In other words, there may be several candidate exposure vector orientations for the respective region. The candidate exposure vector orientations may be predefined or investigated. The control unit draws the exposure vectors of the respective region for each of the candidate exposure vector orientation. The control unit evaluates for each of the exposure vectors the respective mass integral value at the start point of the respective exposure vector and a mass integral value at the end point of the respective exposure vector.

In a next step, the control unit calculates the absolute difference value describing the absolute difference between the mass integral value at the start point of the respective exposure vector and the endpoint of the respective exposure vector. In a next step, the control unit determines the average absolute difference value describing the average of the absolute difference values of the exposure vectors in the region of the respective candidate exposure vector orientation. In a next step, the control unit compares the average absolute difference values evaluated for the respective candidate exposure vector orientations of the region.

A next step comprises a selecting of the respective exposure vector orientation for the respective region out of the candidate exposure vector orientations depending on the average absolute difference values calculated for the respective candidate exposure vector orientations. In other words, the exposure vector orientation for the respective region is selected as a function of the average absolute difference value. The selection may be performed by the control unit by choosing the candidate exposure vector orientation giving the highest absolute difference value.

According to a further embodiment of the invention, the orientation evaluation method comprises a step of evaluating the respective exposure vector orientation of an underlying region of an underlying layer of the region. In other words, the control unit may evaluate the respective exposure vector orientations of the regions layer by layer. Therefore, the region in a respective layer may be above an underlying region in an underlying layer. A quality of the workpiece may depend on a relation between the exposure vector orientation of the underlying layer and the layer above the underlying layer. In particular, a uniform orientation of the exposure vectors of superimposed regions may lead to a decrease in stability.

It may be necessary to select the exposure vector orientations of stacked regions so that they are different in order to improve the quality of the part. Therefore, the respective exposure vector orientation of the respective region above the underlying region is selected as a function of the exposure vector orientation of the underlying region.

For that reason, the control unit limits the candidate exposure vector orientations of the respective region to those having an orientation difference above a predefined orientation difference value with respect to the respective exposure vector orientation of the underlying region. In other words, only candidate exposure vector orientations are analysed during the orientation evaluation method that have the orientation difference to the respective exposure vector orientation of the underlying region above the predefined orientation difference value. The predefined orientation difference value may be 45°.

According to a further embodiment of the invention, the orientation evaluation method comprises a step of calculating for each region of at least a second category a maximum value of an onset exposure vector of an exposure sequence. The maximum value gives a maximum of the mass integral value at the start point of the respective onset exposure vector and the mass integral value at the end point of the respective onset exposure vector. The exposure sequence sets the chronological order in which the exposure vectors are illuminated during manufacturing. The exposure sequence starts with the onset exposure vector.

The method comprises a step of performing for each region having the onset exposure vector with a maximum value below a threshold value a predefined reordering algorithm for evaluating a new exposure sequence.

The reordering algorithm comprises a step of calculating the maximum values of the exposure vectors of the exposure sequence.

If at least one of the exposure vectors of the exposure sequence has a maximum value above the threshold value, a first of the respective exposure vectors according to the exposure sequence is defined as a new onset exposure vector of the new exposure sequence.

Otherwise the exposure vector of the highest maximum value is defined as the new onset exposure vector of the new exposure sequence.

According to a further embodiment of the invention, the method comprises a step of evaluating for each of the exposure vectors of the region of at least a third category of the categories, the respective mass integral value along the respective exposure vector.

The method comprises a step of evaluating manufacturing parameters along the exposure vectors depending on the respective mass integral value along the respective exposure vector. The step of evaluating manufacturing parameters along the exposure vectors may also be performed on exposure vectors of the regions of the second category of the categories. According to a further embodiment of the invention, the method comprises a step of removing contours of the regions of at least a fourth category of the categories from the layers. In other words, the contours of the regions of at least the fourth category are deleted. It may not be possible to produce the contours of the regions in a stable manner. For that reason, the control data for the laser powder bed fusion device to manufacture the respective regions are generated for the respective region without a part of the region comprising the contour. The contour may comprise grid points of the region of a local modified mass integral value below a predefined threshold.

According to a further embodiment of the invention, the function describing a local modified mass integral value within the respective of the layers is a pattern comprising grid points.

As second aspect of the present invention relates to a method to operate a laser powder bed fusion device to manufacture a workpiece.

The method to operate a laser powder bed fusion device comprises steps of a method of providing control data for manufacturing a workpiece by a laser powder bed fusion device according to the first aspect of the present invention.

The method to operate a laser powder bed fusion device comprises a step of providing the control data to the laser powder bed fusion device by the control unit to control the laser powder bed fusion device to manufacture the workpiece.

For use cases or use situations which may arise in the methods and which are not explicitly described here, it may be provided that, in accordance with the methods, an error message and/or a prompt for user feedback is output and/or a default setting and/or a predetermined initial state is set.

A third aspect of the present invention relates to a control unit. The control unit is configured to perform a method of providing control data for manufacturing a workpiece by a laser powder bed fusion device according to the first aspect of the present invention and/or to perform a method for providing the control data to the laser powder bed fusion device to control the laser powder bed fusion device to manufacture the workpiece according to the second aspect of the present invention.

A fourth aspect of the present invention relates to a laser powder bed fusion device, configured to manufacture a workpiece. The laser powder bed fusion device comprises a control unit according to the third aspect of the present invention.

A fifth aspect of the invention is related to a computer program product comprising program code for performing a method according to the first aspect and/or the second aspect. The computer program product may also be regarded to a computer program.

A sixth aspect of the invention is related to a computer-readable storage medium comprising at least the computer program product according to the fifth aspect.

The control unit may comprise a computing unit. A computing unit may in particular be understood as a data processing device, which comprises processing circuitry. The computing unit may therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

Independent of the grammatical term usage, individuals with male, female or other gender identities are included within the term.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures

FIG 1     shows a schematic illustration of a method to operate a laser powder bed fusion device to manufacture a workpiece;

FIG 2     shows a schematic illustration of a model of the workpiece separated into a stack of layers;

FIG 3     shows a schematic illustration of reference volumes;

FIG 4     shows a schematic illustration of regions within a layer;

FIG 5     shows a schematic illustration of exposure vectors in a region;

FIG 6     shows a schematic illustration of vector grid points along an exposure vector; and

FIG 7     shows a schematic illustration of the vector of FIG 6 divided in three vectors.

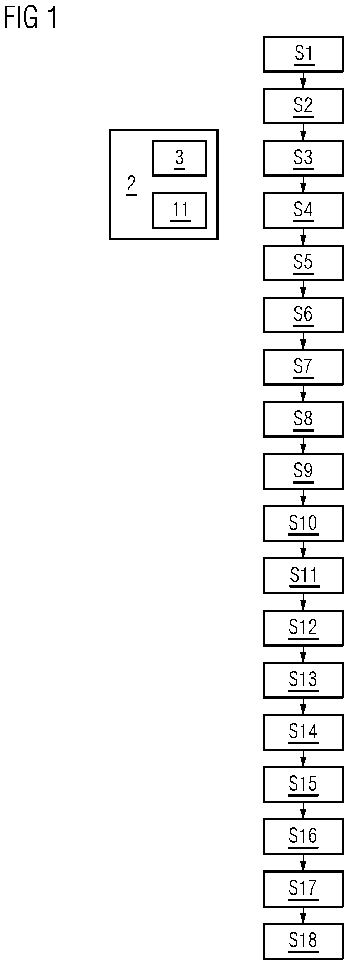

FIG 1 shows a schematic illustration of a method to operate a laser powder bed fusion device to manufacture a workpiece.

The method to operate the laser powder bed fusion device 2 may comprise steps of a method of providing control data 11 for manufacturing a workpiece 1 by the laser powder bed fusion device 2.

A first step S1 of the method may comprise a reception of a volume model 4 of the workpiece 1 by a control unit 3. The volume model 4 may describe a volume of a material of the workpiece 1 to be manufactured by the laser powder bed fusion device 2. The volume model 4 may be a CAD file defining the workpiece 1.

A second step S2 of the method may comprise an evaluation of a stack 5 of consecutive layers 6 for manufacturing the workpiece 1 based on the volume model 4 by the control unit 3. The layers 6 may define a deposition of material in a plane of the workpiece 1 in an additive manufacturing procedure for manufacturing the workpiece 1 by the laser powder bed fusion device 2. A stack 5 orientation of the stack 5 of layers 6 may depend on a geometry of the volume model 4.

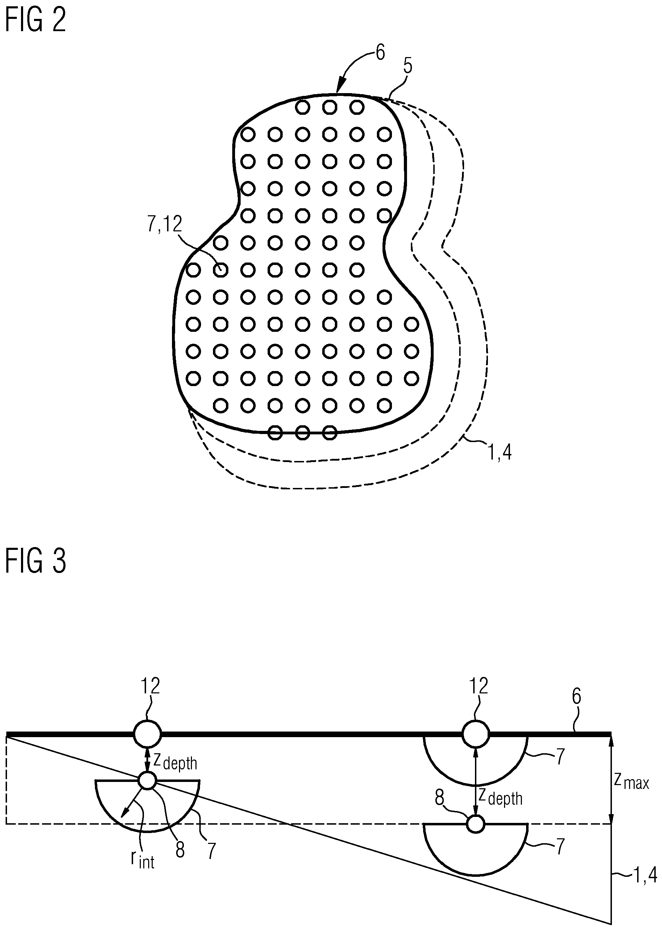

A third step S3, a fourth step S4 and a fifth step S5 may relate to a separation of the layers 6 into regions 9 of different modified mass integral values. The next steps may also refer to FIG 3.

In the third step S3 of the method, the control unit 3 may evaluate for each of the layers 6 a local material depth function describing a local material depth of the volume model 4 below the respective layer 6. The local material depth may be limited to a predefined maximum depth. In other words, the control unit 3 determines the depth of the volume model 4 beneath the respective layers 6. It may be possible that the local material depth is only relevant up to the predefined maximum depth. Therefore the maximum possible local material depth of the volume model 4 may be the predefined maximum depth.

The fourth step S4 of the method may comprise an evaluation of a function describing a local modified mass integral value within a respective one of the layers 6. The local modified mass integral value may describe a local proportion of a predefined reference volume 7 within a local depth volume of the local material depth. The local modified mass integral value may be calculated for grid points 12 of a regular grid within the respective layers 6. In other words, the control unit 3 may generate for each of the layers 6 the respective regular grid. The respective regular grid may comprise the grid points 12 of a regular grid distance of 0.1 mm. The control unit 3 may calculate the local modified mass integral value for each of the grid points 12 of the regular grid.

In other words, for each layer 6 an interior of the workpiece 1 may be covered by the regular grid points 12. An example of one of the layers 6 for manufacturing the workpiece 1 part is shown in FIG 2. Typically, a regular distance of 0.1 mm is chosen for the grid of the grid points 12.

For each of the grid points 12, the modified mass integral may be evaluated. The modified mass integral is shift into the local material depth $z_{depth}$. The local material depth of grid point $(x,y,z)$ may be limited to the maximal depth $z_{max}$ and may be defined by

$$z_{depth}(x, y, z) = \int_{z-z_{max}}^{z} dz \, .$$

The local material depth value gives a distance of downwards material that contribute to the workpiece 1. The modified mass integral value for the grid point with coordinates **(x,y,z)** may be evaluated as

$$mInt_{depth}(x, y, z)$$
$$= \frac{3}{2\pi r_{int}^3} \int_{z-z_{depth}\leq 0} \left( (x - x')^2 + (y - y')^2 + \left( z - z_{depth} - z' \right)^2 \right.$$
$$\left. \leq r_{int}^2 \right) dx' dy' dz' .$$

The modified mass integral value may determine how much of the predefined reference volume 7 which may be a halfsphere of a predefined radius $r_{int}$ is enclosed in the model 4 in local depth $z_{depth}$. The values of $r_{int}$ and $z_{max}$ may be chosen empirically. The values $r_{int}$ = 0. 7 mm and $z_{max}$ = 2 mm may be possible selections.

Alternatively, other convolutional kernels in the local material depth $z_{depth}$ may be used as the predefined reference volume 7 besides the halfsphere described above. For example, cylindrical or half-ellipsoidal forms are also well suited.

Other shapes such as ellipsoid and cylinder can be also applied as the predefined reference volume 7. Possible formulas for the mass integral of the ellipsoidal predefined reference volume 7 and the cylindrical predefined reference volume 7 are stated below:

$$mInt_{ellipse}(x, y, z) = \frac{3}{2\pi r_x r_y r_z} \int \left( \frac{(x - x')^2}{r_x{}^2} + \frac{(y - y')^2}{r_y{}^2} + \frac{(z - z')^2}{r_z{}^2} \leq 1 \right) dx' dy' dz',$$

$$mInt_{cylinder}(x, y, z) = \frac{1}{\pi r_{cyl}{}^2 h_z} \int_{z-h_z}^{z} \left( \frac{(x - x')^2}{r_{cyl}{}^2} + \frac{(y - y')^2}{r_{cyl}{}^2} \leq 1 \right) dx' dy' dz'$$

The fifth step S5 of the method may comprise a division of the respective layers 6 into continuous regions 9 of predefined categories based on the local modified mass integral value within the respective layers 6. The categories are defined by predefined local modified mass integral value ranges. A stable manufacturing of the regions 9 may require manufacturing parameters adjusted to the local modified mass integral values. Therefore, the categories are assigned respective manufacturing parameters. In other words, for manufacturing the respective layer 6, the respective layer 6 may be divided into lateral regions 9. Each of the regions 9 may be assigned to a respective of the categories. The categories define the manufacturing parameters to manufacture the respective regions 9 by the laser powder bed fusion device 2. The category of the respective region 9 is selected based on the local modified mass integral values of the grid points 12 of the region 9.

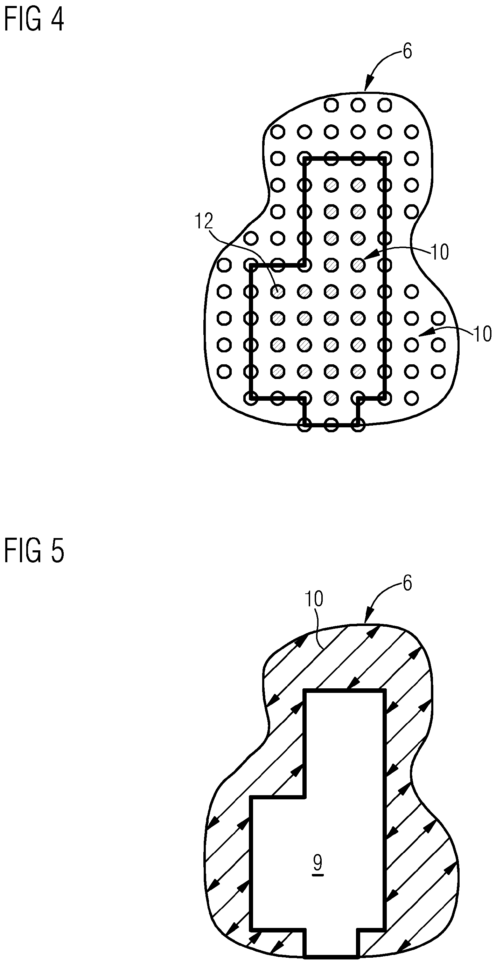

In other words, after evaluation of the local modified mass integral values $mInt_{depth}(x,y,z)$ for each layer 6, one or multiple threshold values $\theta_{int}$ of the modified mass integral values may be selected. The threshold values $\theta_{int}$ may define the ranges of the categories. The layers 6 of the workpiece 1 may then be separated into the regions 9 accordingly to the different $\theta_{int}$ values. FIG 4 shows an example of a separation of one of the layers 6 in two of the regions 9. One of the two regions 9 may comprise grid points 12 of local modified mass integral values above a threshold $mInt_{depth} > \theta_{int}$. The other of the two regions 9 may comprise grid points 12 of the local modified mass integral values below or equal to the threshold $mInt_{depth} \leq \theta_{int}$.

A reasonable choice of threshold values from experiments may be between $\theta_{int}$=0.25 to $\theta_{int}$=0.1. The identified regions 9 may be assigned respective, different manufacturing parameters. The regions 9 with low $mInt_{depth}$ values correspond to low-pitched overhangs of the model 4. These regions 9 are typically assigned manufacturing parameters comprising a lower laser power in combination with a smaller hatch distance and/or shorter pauses between the exposition of the exposure vectors 10. A small overlap between the regions 9, for example 0.1 mm to 0.3 mm may be intended. Regions 9 of higher modified mass integral values may be exposed first, followed by the regions 9 with lower modified mass integral values.

A sixth step S6 of the method may comprise a removing of contours of regions 9 of the at least a fourth category from the layers 6. In other words, the categories comprise a fourth category associated with grid points 12 having the local modified mass integral values below a predefined fourth threshold. The modified local mass integral values below the predefined fourth threshold may be too low to allow a stable manufacturing of the contours of the specific regions 9. Therefore, the respective regions 9 may be deleted. In other words, contours of the very low mass regions 9 below a predefined threshold may advised to be skipped in most cases.

The steps S7 to S9 may be related to a choice of an optimal exposure vector 10 orientation for at least the regions 9 of a first category.

In the seventh step S7 of the method, the control unit 3 may evaluate for each region 9 of at least the first category the respective exposure vector 10 orientation according to a predefined orientation evaluation method. In other words, the regions 9 are manufactured by guiding an energy beam along the exposure vectors 10 within the regions 9. The exposure vectors 10 of the respective region 9 may be oriented in a respective exposure vector 10 orientation of the respective region 9. The exposure vector 10 orientation of the exposure vectors 10 of the respective region 9 may influence a quality of the respective region 9. Therefore, the exposure vector 10 orientations of the regions 9 of at least the first category may be evaluated using the predefined orientation evaluation method.

In other words, for every isolated region 9 of at least the first category associated with a low modified mass integral value ($mInt_{depth} \leq \theta_{int}$) below a first threshold value the optimal exposure vectors 10 orientation may be evaluated. Exposure vectors 10 orientations of regions 9 of other categories may be selected using standard layer 6 to layer 6 rotation methods. In order to find the optimal hatch vectors 10 orientation of the region 9, different angles may be compared. It may be possible to evaluate candidate exposure vector 10 orientations which may differ by 5° or 10°. As an example, for every region 9 **360°/5° = 72** or **360°/10° = 36** different candidate exposure vector 10 orientations may be compared. For the selected exposure vector 10 orientation, the region 9 may be hatched using a standard zig-zag exposure vector 10 technique according to the state of the art. An example of hatched region 9 is shown in FIG 5. The standard mass integral value with $z_{depth} = 0$ may be calculated for the start point and the end point of each exposure vector 10. For comparison, the average of absolute values of the differences may be taken

$$a_{orient} = \frac{1}{n_{vectors}} \sum_{i=0}^{n_{vectors}-1} \left| mInt\left(vec_{start}^i\right) - mInt\left(vec_{end}^i\right) \right|.$$

The candidate exposure vector 10 orientation whose average value $a_{orient}$ is maximal may be chosen as the exposure vector 10 orientation of the region 9. It means that with this exposure vector 10 orientation, a majority of the exposure vectors 10 start or end at points of a higher standard mass integral value.

Additionally, consecutive layer 6 regions 9 should have sufficiently different exposure vector 10 orientations to average out orientation dependent effects as e.g., surface corrugation. Therefore, if the optimal exposure vector 10 orientation may differs by less than 45° from the previous layer 6 region 9, than the candidate exposure vector 10 orientation with a maximal $a_{orient}$ value may be chosen only from candidate exposure vector 10 orientations that are different enough from the exposure vector 10 orientation of the region 9 of the previous layer 6.

The eighth step S8 of the method may comprise a calculation for each candidate exposure vector 10 orientation of the respective region 9 an average absolute difference value describing an average of an absolute difference value of the exposure vectors 10 in the region 9 oriented in the respective candidate exposure vector 10 orientation. In other words, there may be multiple candidate exposure vector 10 orientations for the respective region 9. A group of candidate exposure vector 10 orientations of the respective region 9 may depend on the exposure vector 10 orientation of one or more regions 9 below the respective region 9. In other words, only candidate exposure vector 10 orientations may be used, having an orientation difference above a predefined difference value with respect to the exposure vector 10 orientation of the region 9 below the respective region 9.

In order to select the exposure vector 10 orientation of the respective region 9 from the candidate exposure vector 10 orientations, the control unit 3 may calculate the respective average absolute difference value for each of the candidate exposure vector 10 orientations. The control unit 3 may arrange the exposure vectors 10 of the respective candidate exposure vector 10 orientation in the respective region 9. Each of the candidate exposure vectors 10 may have a start point and a respective end point. The control unit 3 may calculate the modified mass integral value for the start point of the respective exposure vector 10 and the end point of the respective exposure vector 10. In a next step, the control unit 3 may calculate the absolute difference value, defining the absolute difference between the modified mass integral value at the start point of the respective exposure vector 10 and the endpoint of the respective exposure vector 10. Each of the exposure vectors 10 may have a respective absolute difference value. In a next step, the control unit 3 may calculate the average absolute difference value giving the average of the absolute difference values of the exposure vectors 10.

The ninth step S9 of the method may comprise a selection of the respective exposure vector 10 orientation for the respective region 9 out of the candidate exposure vector 10 orientations depending on the average absolute difference values calculated for the respective candidate exposure vector 10 orientations. As an example, the control unit 3 may select the exposure vector 10 orientation having a biggest average absolute difference value as the exposure vector 10 orientation of the respective region 9.

The steps S10 to S13 may relate to a resorting of the exposure vectors 10 in the regions 9 of at least a second category according to maximum mass integral values.

A tenth step S10 of the method may comprise a calculation for each region 9 of at least a second category a maximum value of an onset exposure vector 10 of an exposure sequence. The maximum value gives a maximum of the mass integral value at the start point of the respective onset exposure vector 10 and the mass integral value at the end point of the respective onset exposure vector 10. In other words, to manufacture the respective region 9, the control unit 3 may generate an exposure sequence describing the sequence of the exposure vectors 10 during the manufacturing. The exposure sequence may be determined according to a standard method. However, the exposure sequence may be replaced by a new exposure sequence. A need to replace the exposure sequence with a new exposure sequence may depend on the maximum value of the onset exposure vector 10.

An eleventh step S11 may comprise performing for each region 9 having an onset exposure vector 10 with the maximum value below a predefined threshold value, a predefined reordering algorithm for evaluating the new exposure sequence.

In a twelfth step S12 the control unit 3 may calculate the maximum values of the other exposure vectors 10 of the exposure sequence.

In a thirteenth step S13, if at least one of the exposure vectors 10 of the sequence has a maximum value above the threshold value, the control unit 3 may define a first of the respective exposure vectors 10 according to an order of the exposure sequence as a new onset exposure vector 10 of the new exposure sequence.

Otherwise the control unit 3 may define the exposure vector 10 of the highest maximum value as the onset exposure vector 10 of the new exposure sequence.

In other words, a reordering algorithm for exposure vectors 10 is introduced, since even with the optimal exposure vector 10 orientation and the exposure vectors 10 as described above, it may still happen that the exposure of a respective one of the exposure vectors 10 starts at an inappropriate point in the layer 6 with a very low modified mass integral value. Similar to step S8, the standard mass integral values (with $z_{depth} = 0$) for the start point and the end point of the respective exposure vector 10 may be used. The maximum of these two values may be evaluated as

$$\max_{mInt}^i = \max\left(mInt(vec_{start}^i), mInt(vec_{end}^i)\right),$$

where $i$ is the serial number of the exposure vector 10 in the hatch. An exposure vector 10 enumeration of the region 9 may begin with $i = 0$. If the maximal value

$$\max_{mInt}^0 < M_v$$

of the first exposure vector 10 is below a chosen threshold $M_v$, then an attempt to find another exposure vector 10 for hatching start will be made. A value for the threshold $M_v$ may be 0.25 or above. If the region 9 has been defined before with $\theta_{int} < 0.25$, then the threshold value $M_v = \theta_{int}$ may be taken.

If the above condition is false, no reordering is required. Otherwise, the exposure vectors 10 from the region 9 may be proved consecutively until a false condition for the exposure vector 10 of some index $i_{new}$ is found. If no exposure vector 10 with $\max_{mInt}^i \geq M_v$ is found, then $i_{new}$ may chosen as the exposure vector 10 with $\max_i(\max_{mInt}^i)$.

The new onset exposure vector 10 $i_{new}$ may start the new hatch exposure vectors 10 order, defined by the exposure sequence. The following exposure vectors 10 $i_{new} + 1, i_{new} + 2, ...$ may be exposed in succession. And afterwards the exposure vectors 10 in reverse order $i_{new} - 1, i_{new} - 2, ...$ may be exposed. Effectively, exposure vectors 10 with critically low start/end-point masses may be exposed in a decreasing mass order.

The next steps may relate to a tuning of exposure parameters and/or vector 10 splitting according to the mass integral value along the respective exposure vector 10.

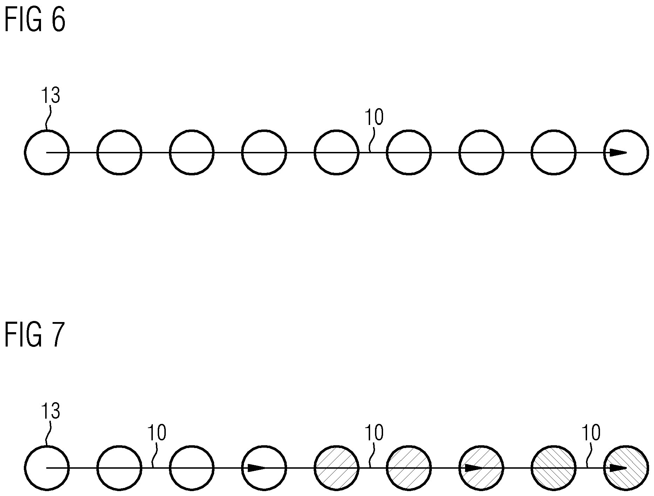

The steps may serve to refine the laser powder bed fusion process parameter selection. A regular vector 10 grid may be applied to each of the exposure vectors 10, covering its beginning and end. Similar to the grid of grid points 12 a reasonable choice for the vector 10 grid step size may be 0.1 mm. An example is shown in FIG 6.

The standard mass integral values may be evaluated for each vector 10 grid point. One possible tuning of the exposure parameters is to assign a continuous function that reduces laser power according to the mass integral values. Another possibility is to split the respective exposure vector 10 into several vectors 10 according to sections of different mass integral thresholds.

A fourteenth step S14 of the method may comprises an evaluation for each of the exposure vectors 10 of the region 9 of a third category the respective mass integral value along the respective exposure vector 10. Therefore the control unit 3 may arrange a regular vector 10 grid of vector grid points 13 along each of the exposure vectors 10.

A fifteenth step S15 of the method comprises an evaluation of manufacturing parameters along the exposure vectors 10 depending on the respective mass integral value along the respective exposure vector 10. In other words, the control unit 3 may change the manufacturing parameters along the exposure vectors 10.

A sixteenth step S16 of the method may comprise a generation of control data 11 to control the laser powder bed fusion device 2 to manufacture the workpiece 1. In other words the control unit 3 may generate the control data 11 necessary to manufacture the workpiece 1 by the manufacture device.

A seventeenth step S17 of the method may comprise a provision of the control data 11 to the laser powder bed fusion device 2 by the control unit 3 to control the laser powder bed fusion device 2 to manufacture of the workpiece 1.

An eighteenth step S18 of the method may comprise a manufacturing of the workpiece 1 by the laser powder bed fusion device 2.

Note that a respective one of the procedures may be used separately or combined with at least another one of the procedures. The respective procedures alone may also improve laser powder bed fusion manufacturing process.

With the method described above, overhang regions 9 of low angles may be manufactured without supports. Long overhangs of 17.5° can be built with Inconel 718 material. In comparison, standard techniques led to crash in the manufacturing.

FIG 2 shows a schematic illustration of a model 4 of the workpiece separated into a stack 5 of layers 6.

The stack 5 of layers 6 may be a sequence of layers 6 aligned in parallel and separated by appropriate distances. The figure shows one of the layers 6 which may be placed on top of other layers 6. A portion of the layer 6 within the model 4 may have a regular grid of grid points 12. The grid points 12 may be separated by a grid spacing. For each of the grid points 12, the control unit 3 may evaluate the respective modified mass integral value. The evaluation of the respective modified mass integral values is shown in FIG 3.

FIG 3 shows a schematic illustration of reference volume 7s.

FIG 3 shows a cross section of the model 4. A depth of the model 4 below the layer 6 surface may increase in an x-direction. Therefore the two grid points 12 may have different local depths $z_{depth}$ giving the depth of the model 4 below the grid point. The local depth $z_{depth}$ may be limited to the maximum depth $z_{max}$, as volume below the maximum depth $z_{max}$ may neglected. The reference volumes 7 may be half spheres, wherein each of the reference volumes 7 may have a centerpoint 8 below a respective one of the grid points 12 in the local depth $z_{depth}$. The reference volumes 7 may have a radius $r_{int}$ around the centerpoint 8. The modified mass integral value for the respective grid point with coordinate $(x,y,z)$ may be evaluated as

$$mInt_{depth}(x, y, z)$$
$$= \frac{3}{2\pi r_{int}^3} \int_{z-z_{depth} \leq 0} \left( (x-x')^2 + (y-y')^2 + \left(z - z_{depth} - z'\right)^2 \right.$$
$$\left. \leq r_{int}^2 \right) dx' dy' dz'.$$

It gives how much of the reference volume 7 of radius $r_{int}$ is enclosed in the model 4 of the workpiece 1 in local depth $z_{depth}$. The values of $r_{int}$ and $z_{max}$ may be chosen empirically. The values $r_{int} = 0.7$ mm and $z_{max} = 2$ mm have proven to be a good selection.

FIG 4 shows a schematic illustration of regions 9 within a layer 6.

The workpiece 1 may be separated into regions 9. The two regions 9 may correspond to different categories. The respective grid points 12 may be assigned to one of the two regions 9 depending on the respective modified mass integral values $mInt_{depth}$. The workpiece 1 may be separated into two regions 9 by a threshold value $\theta_{int}$ of the modified mass integral value $mInt_{depth}$, seperating the ranges of the two categories. FIG 4 shows an example of separation in the two regions 9 wherein grid points 12 of $mInt_{depth} > \theta_{int}$ are assigned to one of the regions 9 and grid points 12 of $mInt_{depth} \leq \theta_{int}$ to the other of the two regions 9. The region 9 with grid points 12 $mInt_{depth} \leq \theta_{int}$ may be close to a border of the model 4. The lower modified mass integral values $mInt_{depth}$ of the region 9 may be associated with steep borders of the workpiece 1. The region 9 with the lower modified mass integral values $mInt_{depth}$ correspond to low-pitched overhangs. These regions 9 are typically assigned with lower laser power in combination with smaller hatch distance and/or pauses between exposure vectors 10. It may be intended to define a small overlap between the two regions 9 of 0.1 mm to 0.3 mm.

FIG 5 shows a schematic illustration of exposure vectors 10 in a region

FIG 5 shows the exposure vectors 10, also called hatch vectors 10, for the region 9 of FIG. 4 having the lower modified mass integral values $mInt_{depth}$.

FIG 6 shows a schematic illustration of vector grid points 13 along an exposure vector 10.

The control unit 3 may arrange vector grid points 13 along each of the exposure vectors 10. The Control unit 3 may calculate the modified mass integral values $mInt_{depth}$ for each of the vector grid points 13. The control unit 3 may change manufacturing parameters along the exposure vector 10 as a function of the modified mass integral values $mInt_{depth}$ along the exposure vector 10.

FIG 7 shows a schematic illustration of the vector 10 of FIG 6 divided in three vectors 10.

The control unit 3 may divide the exposure vector 10 of FIG 6 into shorter exposure vectors 10, wherein each of the vectors 10 may comprise vector 10 grid points of a similar modified mass integral value $mInt_{depth}$.

Reference signs

| | |
|---|---|
| 1 | workpiece |
| 2 | laser powder bed fusion device |
| 3 | control unit |
| 4 | model |
| 5 | stack |
| 6 | layer |
| 7 | reference volume |
| 8 | centerpoint |
| 9 | region |
| 10 | exposure vector |
| 11 | control data |
| 12 | grid point |
| 13 | vector grid point |

**Claims**

1. Method of providing control data (11) for manufacturing a workpiece (1) by a laser powder bed fusion device (2), comprising the following steps performed by a control unit (3):

   - receiving a volume model (4) of the workpiece (1), the volume model (4) describing a volume of material of the workpiece (1) to be manufactured by the laser powder bed fusion device (2);
   - evaluating a stack (5) of consecutive layers (6) for manufacturing the workpiece (1) based on the volume model (4);
   - evaluating for each of the layers (6) a local material depth function describing a local material depth of the volume model (4) below the respective layer (6), wherein the local material depth is limited to a predefined maximal depth;
   - evaluating a function describing a local modified mass integral value within a respective of the layers (6), the local modified mass integral value describing a local portion of a predefined reference volume (7) in a local depth within a volume of the model (4);
   - dividing the respective layers (6) into continuous regions (9) of predefined categories based on the local modified mass integral values, wherein the categories are defined by predefined local mass integral value ranges and wherein the categories are assigned respective manufacturing parameters and exposure vectors (10); and
   - generating control data (11) to control the laser powder bed fusion device (2) to manufacture the workpiece (1).

2. Method according to claim 1,

   comprising the following steps performed by the control unit (3) :

   - evaluating for each region (9) of at least one first category a respective exposure vector (10) orientation according to a predefined orientation evaluation method, the orientation evaluation method comprising the steps of:
   - calculating for each candidate exposure vector (10) orientation of the respective region (9) an average absolute difference value describing an average of absolute difference values of the exposure vectors (10) in the region (9) oriented in the respective candidate exposure vector (10) orientation;

   wherein the absolute difference value of the exposure vector (10) describes an absolute difference between a mass integral value at a start point of the respective exposure vector (10) and a mass integral value at an end of the respective exposure vector (10); and

- selecting the respective exposure vector (10) orientation for the respective region (9) out of the candidates depending on the average absolute difference values calculated for the respective candidate exposure vector (10) orientations.

3. Method according to claim 2,
the orientation evaluation method comprising the following steps of:

- evaluating the respective exposure vector (10) orientation of an underlying region (9) of an underlying layer (6) of the respective region (9);
- limiting the candidate exposure vector (10) orientations of the respective region (9) to those having an orientation difference above a predefined orientation difference value with respect to the respective exposure vector (10) orientation of the underlying region (9).

4. Method according to claim 1 to 3
the orientation evaluation method comprising the following steps of:

- calculating for each region (9) of at least one second category a maximum value of an onset exposure vector (10) of an exposure sequence with a predefined threshold value, the maximum value giving a maximum of the mass integral value at the start point of the respective exposure vector (10) and the mass integral value at the end point of the respective exposure vector (10);
- performing for each region (9) of the at least one category having an onset exposure vector (10) with a maximum value below the threshold value a predefined reordering algorithm for evaluating a new exposure sequence, the reordering algorithm comprising the steps of:
- calculating the maximum values of the exposure vectors (10) of the exposure sequence;
- if at least one of the exposure vectors (10) of the sequence has a maximum value above the threshold value, defining a first of the respective exposure vectors (10) according to the sequence as an onset exposure vector (10) of the new exposure sequence; and otherwise
- defining the exposure vectors (10) of the highest maximum value as the onset exposure vector (10) of the new exposure sequence.

5. Method according to any one of the preceding claims comprising the following steps performed by the control unit (3):

- evaluating for each of the exposure vectors (10) of at least one third category, the respective mass integral value along the respective exposure vector (10); and
- evaluating manufacturing parameters along the exposure vectors (10) depending on the respective mass integral value along the respective exposure vector (10).

6. Method according to any one of the preceding claims, comprising the following steps performed by the control unit (3):

- removing contours of regions (9) of at least one fourth category of the categories from the layers (6).

7. Method according to any one of the preceding claims, wherein the function describing a local modified mass integral value within the respective of the layers (6) is a pattern comprising grid points (12).

8. Method to operate a laser powder bed fusion device (2) to manufacture a workpiece (1), comprising:

- the steps of a method according to any one of the preceding claims; and
- Provision of the control data (11) to the laser powder bed fusion device (2) by the control unit (3) to control the laser powder bed fusion device (2) to manufacture the workpiece (1).

9. Control unit (3), configured to perform a method according to any one of the claims 1 to 7 or according to a method according to claim 8.

10. Laser powder bed fusion device (2), configured to manufacture a workpiece (1), comprising a control unit (3) according to claim 9.

11. Computer program which is directly loadable into a memory of a computing device, comprising program means for executing the steps of the method according to any one of the claims 1 to 7 and/or to perform a method according to claim 8 when the program is executed in the electronic computing device.

12. Storage medium having electronically readable control information stored on it comprising at least one computer program according to claim 11 and configured to perform a method according to any one of the claims 1 to 7 and/or to perform a method according to claim 8 when the storage medium is used in a computing device.

FIG 1

```
        ┌───────────┐
        │    S1     │
        └─────┬─────┘
              │
        ┌─────▼─────┐
        │    S2     │
        └─────┬─────┘
              │
        ┌─────▼─────┐
        │    S3     │
        └─────┬─────┘
              │
        ┌─────▼─────┐
        │    S4     │
        └─────┬─────┘
              │
        ┌─────▼─────┐
        │    S5     │
        └─────┬─────┘
              │
        ┌─────▼─────┐
        │    S6     │
        └─────┬─────┘
              │
        ┌─────▼─────┐
        │    S7     │
        └─────┬─────┘
              │
        ┌─────▼─────┐
        │    S8     │
        └─────┬─────┘
              │
        ┌─────▼─────┐
        │    S9     │
        └─────┬─────┘
              │
        ┌─────▼─────┐
        │   S10     │
        └─────┬─────┘
              │
        ┌─────▼─────┐
        │   S11     │
        └─────┬─────┘
              │
        ┌─────▼─────┐
        │   S12     │
        └─────┬─────┘
              │
        ┌─────▼─────┐
        │   S13     │
        └─────┬─────┘
              │
        ┌─────▼─────┐
        │   S14     │
        └─────┬─────┘
              │
        ┌─────▼─────┐
        │   S15     │
        └─────┬─────┘
              │
        ┌─────▼─────┐
        │   S16     │
        └─────┬─────┘
              │
        ┌─────▼─────┐
        │   S17     │
        └─────┬─────┘
              │
        ┌─────▼─────┐
        │   S18     │
        └───────────┘
```

2

3

11

FIG 2

FIG 3

FIG 4

FIG 5

FIG 6

13

10

FIG 7

13

10

10

10

| | Europäisches Patentamt European Patent Office Office européen des brevets | **EUROPEAN SEARCH REPORT** | **Application Number** EP 23 21 9225 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/039145 A1 (KASTSIAN DARYA [DE] ET AL) 6 February 2020 (2020-02-06) | 1,2,5-12 | INV. B22F10/28 |
| A | * paragraphs [0002], [0018], [0029], [0038], [0041] - [0048], [0058], [0059], [0066], [0067], [0070]; claim 1; figures 1,3,9 * | 3,4 | B22F10/80 B29C64/153 B29C64/393 B33Y50/02 G06F30/10 |
| | ----- | | |
| Y | EP 3 581 297 A1 (SIEMENS AG [DE]) 18 December 2019 (2019-12-18) | 1,2,5-12 | ADD. |
| A | * paragraphs [0024] - [0030], [0040]; claim 19 * | 3,4 | G06F111/04 G06F119/18 |
| | ----- | | |
| Y | GAYNOR ANDREW T ET AL: "Topology optimization considering overhang constraints: Eliminating sacrificial support material in additive manufacturing through design", STRUCTURAL AND MULTIDISCIPLINARY OPTIMIZATION, SPRINGER BERLIN HEIDELBERG, BERLIN/HEIDELBERG, vol. 54, no. 5, 13 September 2016 (2016-09-13), pages 1157-1172, XP036097795, ISSN: 1615-147X, DOI: 10.1007/S00158-016-1551-X [retrieved on 2016-09-13] | 1,2,5-12 | |
| A | * abstract * * Sections 2, 2.2, 3; figures 2,4 * | 3,4 | TECHNICAL FIELDS SEARCHED (IPC) B22F B33Y G06F C22C B29C |
| | ----- | | |
| Y | WO 2022/123224 A1 (RENISHAW PLC [GB]) 16 June 2022 (2022-06-16) | 1,2,5-12 | |
| A | * pages 1,7; figures 3,4 * * pages 18,20 * | 3,4 | |
| | ----- | | |
| Y | WO 2022/223381 A1 (SLM SOLUTIONS GROUP AG [DE]) 27 October 2022 (2022-10-27) | 2 | |
| A | * pages 3,4,9; figure 4 * | 1,3-12 | |
| | ----- | | |

The present search report has been drawn up for all claims

| Place of search | Date of completion of the search | Examiner |
|---|---|---|
| Munich | 3 June 2024 | Lampmann, Arne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 9225

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2024

| Patent document cited in search report | Publication date | Patent family member(s) | | Publication date |
|---|---|---|---|---|
| US 2020039145 A1 | 06-02-2020 | CN | 110545940 A | 06-12-2019 |
| | | EP | 3582914 A1 | 25-12-2019 |
| | | US | 2020039145 A1 | 06-02-2020 |
| | | WO | 2018188757 A1 | 18-10-2018 |
| EP 3581297 A1 | 18-12-2019 | CN | 112512729 A | 16-03-2021 |
| | | EP | 3581297 A1 | 18-12-2019 |
| | | EP | 3768448 A1 | 27-01-2021 |
| | | US | 2021255602 A1 | 19-08-2021 |
| | | WO | 2019238440 A1 | 19-12-2019 |
| WO 2022123224 A1 | 16-06-2022 | CN | 116806178 A | 26-09-2023 |
| | | EP | 4008456 A1 | 08-06-2022 |
| | | EP | 4255656 A1 | 11-10-2023 |
| | | US | 2023405681 A1 | 21-12-2023 |
| | | WO | 2022123224 A1 | 16-06-2022 |
| WO 2022223381 A1 | 27-10-2022 | CN | 117377545 A | 09-01-2024 |
| | | EP | 4326466 A1 | 28-02-2024 |
| | | JP | 2024517508 A | 22-04-2024 |
| | | WO | 2022223381 A1 | 27-10-2022 |

EPO FORM P0459

For more details about this annex : see Official Journal of the European Patent Office, No. 12/82